# EUROPÄISCHE PATENTANMELDUNG

(11) **EP 2 725 289 A2**
(43) Veröffentlichungstag der Anmeldung: **30.04.2014**
(21) Anmeldenummer: 13005087.5
(22) Anmeldetag: 24.10.2013
(51) Int. Cl.: F21S 8/02, F21V 8/00, F21Y 101/02, F21Y 105/00, F21V 13/00

(54) **Beleuchtungsvorrichtung**

(30) Priorität: 25.10.2012 DE 102012020985
(71) Anmelder: Bartenbach Holding GmbH, 6071 Aldrans (AT)
(72) Erfinder: Bartenbach, Christian, 6071 Aldrans (AT)
(74) Vertreter: Thoma, Michael

(57) **Zusammenfassung**

Die vorliegende Erfindung betrifft eine Beleuchtungsvorrichtung zur Beleuchtung von Räumen, mit Strahlern (8), die Leuchtmittel vorzugsweise in Form von LEDs umfassen, sowie einer vorzugsweise paneelförmigen Verblendung (3), die den Strahlern (8) zugeordnete Lichtaustrittsöffnungen (4) umfasst, durch die hindurch das von den auf einer Rückseite (11) der Verblendung (3) angeordneten Strahlern (8) abgegebene Strahlerlicht auf einer Vorderseite (12) der Verblendung (3) abstrahlbar ist. Erfindungsgemäß ist zumindest eine Zusatzlichtquelle (13) auf der Rückseite (11) der Verblendung (3) angeordnet, die eine der Zusatzlichtquelle (13) zugeordnete Lichtaustrittsöffnung (4) umfasst, durch die hindurch das Zusatzlicht auf die Leuchtplatte (9) strahlbar ist, wobei der zumindest einen Zusatzlichtquelle (13) Lichtumlenk- und/oder -einkoppelmittel (16) zur Einkopplung des durch die Lichtaustrittsöffnung (4) tretenden Zusatzlichts in die Leuchtplatte (9) unter spitzem Winkel zur Leuchtplattenebene oder -fläche in die Leuchtplatte (9) zugeordnet sind.

## Beschreibung

Die vorliegende Erfindung betrifft eine Beleuchtungsvorrichtung zur Beleuchtung von Räumen, mit Strahlern, die Leuchtmittel vorzugsweise in Form von LEDs umfassen, sowie einer vorzugsweise paneelförmigen Verblendung, die den Strahlern zugeordnete Lichtaustrittsöffnungen umfasst, durch die hindurch das von den auf einer Rückseite der Verblendung angeordneten Strahlern abgegebene Strahlerlicht auf einer Vorderseite der Verblendung abstrahlbar ist, wobei auf der Vorderseite der Verblendung eine transparente Leuchtplatte vorgesehen ist, in die von Zusatzlichtquellen abgegebenes Zusatzlicht eingekoppelt wird, wobei die Leuchtplatte derart beschaffen ist, dass das eingekoppelte Zusatzlicht von der Leuchtplatte vergleichmäßigt diffus abgegeben wird, während das Strahlerlicht durch die Leuchtplatte hindurch gerichtet abstrahlbar ist.

In jüngerer Zeit wurde vorgeschlagen, an Decken- oder Wandpaneelen, mittels derer Gebäudedecken bzw. -wände verkleidet werden, Leuchtenfelder mit einer Vielzahl von Leuchten anzuordnen, um die Decke bzw. Wand sozusagen sternenhimmelartig zu beleuchten bzw. den Raum durch die Decke hindurch oder Wand hindurch auszuleuchten. Hierzu weist das jeweilige Decken- oder Wandpaneel eine Vielzahl von Lichtaustrittsöffnungen auf, durch die hindurch das von den Leuchten abgegebene Licht in den Raum austreten kann. Das genannte Decken- oder Wandpaneel kann dabei eine Verblendung nach Art einer perforierten Lochblende bilden, hinter der die Strahler bzw. deren Leuchtmittel versteckt angeordnet werden können, beispielsweise indem den Leuchtmitteln eine Fokussieroptik zugeordnet wird, die das eingefangene Licht auf einen Brennpunkt im Bereich der Paneellöcher bzw. Lichtaustrittsöffnungen fokussiert und somit auch durch im Durchmesser sehr kleine Lichtaustrittsöffnungen hindurch fokussieren kann, sodass die dahinter liegenden Leuchtmittel nicht mehr sichtbar sind und nicht mehr blenden können. Ein solches Deckenstrahlerpaneel zeigt beispielsweise die Schrift EP 20 31 296 A1. Eine ähnliche Beleuchtungsvorrichtung ist aus der DE 20 2010 002 593 U1 bekannt.

Das durch die Verblendungsbohrungen hindurch fokussierte Licht strahlt gerichtet in den auszuleuchtenden Raum, wodurch im zu beleuchtenden Raum aber oftmals eine relativ hohe Schattigkeit auftritt. Wird das Paneel beispielsweise als Deckenpaneel eingebaut, wird aufgrund der relativ engen Strahlungscharakteristik eine im Verhältnis zur Horizontalbeleuchtungsstärke nur relativ niedrige Vertikalbeleuchtungsstärke erzielt.

Die Schrift DE 10 2011 003 243 A1 beschreibt eine Deckenleuchte, die eine gebündelte Strahlerlicht-Abgabe mit einer diffusen Lichtabgabe kombinieren will. Hierzu wird Streulicht seitlich über die Schmalseite in eine transparente Platte eingespeist, deren Rückseite mit einer lichtstreuenden Struktur in Form einer Punkt und/oder Linienstruktur ausgebildet ist, um das schleifend von der Seite her eingekoppelte Licht aufzustreuen. Andererseits wird Strahlerlicht mittels einer Fokussieroptik von der Rückseite her in die transparente Platte an einer Stelle eingestrahlt, an der die lichtstreuende Struktur ausgespart ist, so dass das Strahlerlicht im Wesentlichen unabgelenkt durch die Platte hindurchtreten kann.

Mit einer solchen kombinierten Strahler- und Streulichtabgabe können zwar die Schattigkeiten herkömmlicher Deckenstrahlerleuchten vermieden bzw. verbessert werden. Allerdings verliert die Leuchte ihre Montage- und Wartungsfreundlichkeit, da beim Ab- und Wiederanbau der Leuchtplatte, bspw. um einen der Strahler dahinter austauschen zu können, die seitlichen Zusatzlichtquellen mitabgebaut und deren Verkabelung gelöst werden muß. Hiervon abgesehen leidet durch die Streulichtquellen die Kompaktheit der Leuchtplatte, da die Zusatzlichtquellen hinter einer schützenden Einfassung der Leuchtplatte anzuordnen sind.

Hiervon ausgehend liegt der vorliegenden Erfindung die Aufgabe zu Grunde, eine verbesserte Beleuchtungsvorrichtung der eingangs genannten Art zu schaffen, die Nachteile des Standes der Technik vermeidet und Letzteren in vorteilhafter Weise weiterbildet. Insbesondere soll die von der Beleuchtungsvorrichtung erzielte Lichtqualität eine geringere Schattigkeit besitzen und sowohl hohe horizontale als auch vertikale Beleuchtungsstärken erzielt werden, ohne dies mit Blendungserscheinungen und das Raumambiente störenden Strahleranordnungen sowie Wartungs-und Montageunfreundlichkeit zu erkaufen.

Erfindungsgemäß wird die genannte Aufgabe durch eine Beleuchtungsvorrichtung nach Anspruch 1 gelöst. Bevorzugte Ausgestaltungen der Erfindung sind Gegenstand der abhängigen Ansprüche.

Es wird also vorgeschlagen, das durch die Verblendung hindurch abgegebene Strahlerlicht, das gerichtet in den Raum fällt, durch diffus streuendes Zusatzlicht zu ergänzen, welches zumindest näherungsweise gleichmäßig hell großflächig von der Verblendungsvorderseite her abgegeben wird und in den auszuleuchtenden Raum fällt. Hierzu wird in eine der gelochten Verblendung vorgeblendete transparente Leuchtplatte von deren Rückseite, d.h. der der Verblendung zugewandten Leuchtplattenseite her Licht eingekoppelt, welches von der Leuchtplatte vergleichmäßigt diffus streuend abgegeben wird. Erfindungsgemäß ist zumindest eine Zusatzlichtquelle auf der Rückseite der Verblendung angeordnet, die eine der Zusatzlichtquelle zugeordnete Lichtaustrittsöffnung umfasst, durch die hindurch das Zusatzlicht auf die Leuchtplatte strahlbar ist, wobei der zumindest einen Zusatzlichtquelle Lichtumlenk- und/oder -einkoppelmittel zur Einkopplung des durch die Lichtaustrittsöffnung tretenden Zusatzlichts in die Leuchtplatte unter spitzem Winkel zur Leuchtplattenebene oder -fläche in die Leuchtplatte zugeordnet sind. Das Strahlerlicht und das aufzustreuende Zusatzlicht werden also von derselben Seite der Leuchtplatte her in die bzw. auf die Leuchtplatte gestrahlt. Während die Leuchtplatte das Strahlerlicht gerichtet hindurch lässt, ohne das Strahlerlicht substantiell aufzustreuen, wird das Zusatzlicht über Umlenk- und/oder Einkoppelmittel so in die Leuchtplatte eingekoppelt, dass es von der Leuchtplatte aufgestreut und diffus abgegeben wird. Diese Doppelfunktion der Leuchtplatte geht von der Überlegung aus, dass durch unterschiedliche Lichteintrittswinkel bei entsprechender Ausbildung der transparenten Leuchtplatte der Lichtdurchtritt durch die transparente Leuchtplatte unterschiedlich gestalten werden kann. Insbesondere kann durch relativ steilen Lichteinfall in nicht streuenden, nicht reflektierenden, insbesondere volltransparenten Leuchtplattenbereichen ein gerichteter Lichtdurchtritt erreicht werden, während eine relativ flachwinklige Lichteinspeisung infolge der Umlenkung des Zusatzlichts, d.h. relativ spitzwinklig zur Ebene der Leuchtplatte in Verbindung mit streuenden und/oder reflektierenden Plattenabschnitten eine vergleichmäßigte Abgabe diffus streuenden Lichts erreicht werden kann.

Dabei kann zwischen der Leuchtplatte und der Verblendung, insbesondere auf der der Verblendung zugewandten Rückseite der transparenten Leuchtplatte eine diffus reflektierende und/oder streuende Lichtumlenkschicht angeordnet sein, um das in die transparente Leuchtplatte eingekoppelte Zusatzlicht an der Rückseite der Leuchtplatte aufzustreuen und/oder zu reflektieren, sodass es von der Vorderseite der Leuchtplatte diffus streuend austritt und dementsprechend relativ hohe Vertikalbeleuchtungsstärken bzw. relativ hohe Beleuchtungsstärken in Ebenen, die senkrecht zur Verblendung bzw. zur Leuchtplatte stehen, erreicht. Das auf die genannte Lichtumlenkschicht treffende Zusatzlicht hellt die genannte Umlenkschicht und damit optisch das Decken- bzw. Wandpaneel auf, was wiederum zu einer deutlich besseren Ausleuchtung des darunter bzw. davor befindlichen Raums führt.

Die genannte Lichtumlenkschicht auf der Rückseite der transparenten Leuchtplatte kann in vorteilhafter Weiterbildung der Erfindung in Form einer Bedruckung der Rückseite der Leuchtplatte, beispielsweise in Form einer Siebdruckschicht ausgebildet sein, wobei die genannte Bedruckung in Form und Farbe grundsätzlich frei gewählt werden kann, wodurch die im Raum erzeugte Lichtatmosphäre in der gewünschten Weise beeinflusst werden kann.

Alternativ oder zusätzlich zu einer solchen Bedruckung kann die genannte Lichtumlenkschicht auch eine Satinierung der transparenten Leuchtplattenrückseite umfassen, um das in die Leuchtplatte eingekoppelte Licht noch weiter zu vergleichmäßigen.

Die genannte Leuchtplatte kann hierbei grundsätzlich aus verschiedenen Materialien bestehen, beispielsweise aus Glas oder transparentem Kunststoff, wobei die Leuchtplatte unmittelbar, insbesondere spaltfrei und/oder flächig aufsitzend, auf der paneelförmigen Verblendung angeordnet sein kann. Alternativ ist jedoch auch eine durch einen Spalt beabstandete Anordnung der Leuchtplatte vor der Verblendung möglich.

Die Leuchtplatte und das Deckenpaneel besitzen in vorteilhafter Weiterbildung der Erfindung eine zumindest näherungsweise kongruente Formgebung, wobei die Verblendung und die Leuchtplatte insbesondere eben ausgebildet sein können. Um gewölbte Decken oder bogenförmig gekrümmte Wände zu verblenden, können die genannte Verblendung bzw. das Lochblendenpaneel und die Leuchtplatte jedoch auch einen entsprechend gekrümmten Verlauf besitzen.

Insbesondere kann dabei in vorteilhafter Weise die Verblendung als Wand- und/oder Deckenpaneel zur Verblendung einer Raumwand und/oder -decke, vorzugsweise als Holz- und oder Verbundplattenpaneel, ausgebildet sein, in dem die Lichtaustrittsöffnungen vorgesehen und/oder in das die Leuchten integriert sind. Das Wand- und/oder Deckenpaneel bildet als vorteilhafterweise selbst eine Blende mit Lichtdurchtrittsöffnung, so daß die Leuchte sozusagen in das Wand- und/oder Deckenpaneel integriert ist bzw. Paneel und Leuchte eine modulare Baugruppe bilden können. Vorteilhafterweise kann dabei ein ganzes Leuchtenfeld umfassend mehrere, vorzugsweise matrizenartig angeordnete Leuchtmittel vorzugsweise in Form von LEDs vorgesehen ist, wobei den Leuchtmitteln, die als Strahler dienen, eine Lichtaustrittsöffnung in dem Paneel sowie eine Fokussieroptik zur Bündelung des abgegebenen Lichts auf einen im Bereich der jeweils zugeordneten Lichtaustrittsöffnung liegenden Brennpunkt zugeordnet sind.

Die Zusatzlichtquellen für die flächige Aufhellung des Leuchtpaneels können grundsätzlich verschieden ausgebildet und verschieden angeordnet sein bzw. können ihnen verschieden ausgebildete Lichteinkoppelmittel zugeordnet sein, um das von den Zusatzlichtquellen abgegebene Licht in die transparente Leuchtplatte einzukoppeln. Gemäß einer vorteilhaften Ausführung der Erfindung können auch die Zusatzlichtquellen hinter der gelochten Verblendung versteckt angeordnet werden, wobei den Zusatzlichtquellen hierbei ebenfalls Lichtaustrittsöffnungen in der Verblendung zugeordnet sind, durch die hindurch das Zusatzlicht in die vorderseitig angeordnete transparente Leuchtplatte einstrahlbar ist. Die genannten Lichtaustrittsöffnungen können vorteilhafterweise ebenfalls lochartig ausgebildet sein und einen Durchmesser besitzen, der deutlich kleiner ist als die Zusatzlichtquellen bzw. die diesen zugeordnete Fokussieroptik. Auch den Zusatzlichtquellen kann bei rückseitiger Anordnung hinter der Verblendung eine Fokussieroptik der genannten Art, d.h. Linsen und/oder Reflektoren umfassend, zugeordnet sein, die das von den Zusatzlichtquellen abgegebene Licht vorteilhafterweise im Wesentlichen vollständig einfangen und durch die Lichtaustrittsöffnungen in der Verblendung hindurch fokussieren.

Die Zusatzlichtquellen können insbesondere ebenfalls als Strahler ausgebildet sein, die sich im Wesentlichen nicht von den Strahlern für die Abgabe des gerichteten Lichts unterscheiden, so dass insgesamt betrachtet hinter dem gelochten Verblendungspaneel eine rasterförmig verteilte Anordnung von gleichartig ausgebildeten Strahlern mit zugehöriger Fokussieroptik angeordnet sein kann. Eine solche ebenfalls rückseitige Anordnung der Zusatzlichtquellen besitzt somit den Vorteil, dass keine unterschiedlichen Strahlertypen bzw. Leuchtentypen montiert werden müssen, was die Fertigung des Deckenpaneels deutlich vereinfacht und ihr unabhängig von den Ausgestaltungsvarianten einen baukastenartigen Aufbau gibt. Wenn in der vorgenannten Weise die vertikalen Leuchtstärken erhöht werden sollen, kann die genannte transparente Leuchtplatte vor das gelochte Verblendungspaneel montiert werden, wenn hingegen eine mehr atmosphärische Raumausleuchtung mit nur gerichtetem Licht gewünscht ist, kann die genannte transparente Leuchtplatte weggelassen bzw. abgenommen werden oder eine transparente Platte ohne Lichteinkoppelmittel verwendet werden, so dass alle Strahler gerichtetes Strahlerlicht abgeben. Vorteilhafterweise besitzen die Leuchtplatte und/oder die Verblendung und/oder ein Rahmenteil der Leuchte lösbare Befestigungsmittel zum lösbaren Anbringen der genannten Leuchtplatte, so daß die Leuchte wahlweise mit und ohne Leuchtplatte verwendbar ist. Die Befestigungsmittel sind dabei vorteilhafterweise von einer Leuchtplattenvorderseite her betätigbar bzw. lösbar und schließbar, um die Leuchtplatte auch bei schon an der Decke oder Wand montierter Situation der Beleuchtungsvorrichtung an- und abmontieren zu können

Bei einer solchen Ausbildung der Zusatzlichtquellen als Strahler mit Anordnung hinter der gelochten Verblendung lässt sich der Beleuchtungscharakter des auszuleuchtenden Raums hervorragend nur durch Anpassung bzw. Veränderung der vor die Verblendung gesetzten transparenten Platte steuern, insbesondere dadurch, dass einmal mehr und einmal weniger Strahlern Lichteinkoppelmittel zugeordnet werden, mittels derer das Licht von weniger oder mehr Strahlern in die transparente Platte eingekoppelt und an der zuvor genannten Reflexionsschicht zwischen transparenter Platte und gelochter Verblendung reflektiert, insbesondere streuend reflektiert und diffus abgegeben werden kann. Je mehr Strahlern entsprechende Einkoppelmittel zugeordnet werden, desto stärker wird der Streulichtanteil. Soll der Streulichtanteil minimiert werden, können die Lichteinkoppelmittel ggf. gänzlich weggelassen werden, so dass die Beleuchtungsvorrichtung ähnlich bekannten Decken- oder Wandpaneelen arbeitet, bei denen durch die Lichtaustrittsöffnungen gerichtete Lichtkegel abgegeben werden. Wird umgekehrt ein hoher Streulichtanteil oder sogar nur eine Streulichtabgabe gewünscht, kann ggf. jedem hinter der gelochten Verblendung angeordneten Strahler ein Lichteinkoppelmittel zugeordnet werden, so dass das Licht aller Strahler in die transparente Platte eingekoppelt und von der Lichtumlenkschicht zwischen transparenter Platte und gelochter Verblendung reflektiert, insbesondere streuend reflektiert und diffus abgegeben wird.

Vorteilhafterweise können die Lichtumlenk- und/oder Einkoppelmittel an der Leuchtplatte lösbar befestigt und/oder nachträglich ein- und/oder anbringbar sein, um je nach Geschmack bzw. Beleuchtungssituation mehr oder weniger Lichtumlenk- bzw. Einkoppelmittel an der Leuchtplatte anbringen zu können. Insbesondere von einer Vorderseite der Leuchtplatte her.

Vorteilhafterweise kann die Lichteinkopplung des Zusatzlichts in die transparente Leuchtplatte durch Einkopplungsmittel bewirkt bzw. gesteuert werden, die in der transparenten Leuchtplatte versenkt angeordnet und/oder in diese Leuchtplatte integriert sein können. Hierdurch lässt sich in einfacher Weise durch Ausbildung der Leuchtplatte steuern bzw. entscheiden, welche der hinter der gelochten Verblendung angeordneten Strahler als Durchtrittsstrahler oder als Zusatzlichtquellen zur Erzeugung diffusen Streulichts dienen sollen. Letzteren wird an der transparenten Leuchtplatte im Bereich der zugehörigen Lichtaustrittsöffnung der gelochten Verblendung bzw. im Bereich der Verlängerung dieser Lichtaustrittsöffnung ein entsprechendes Lichteinkopplungsmittel zugeordnet, das das durch die Lichtaustrittsöffnung kommende Licht umlenkt, so dass dieses dann als Zusatzlicht unter flachen Winkeln bzw. spitzwinklig zur Leuchtplattenfläche in die Leuchtplatte eingekoppelt wird.

Vorteilhafterweise können die Umlenk- bzw. Einkoppelmittel in Aussparungen bzw. Ausnehmungen in der Leuchtplatte aufgenommen sein, die zu einer Vorderseite der Leuchtplatte hin offen ausgebildet und ggf. durch eine Abdeckung oder die Umlenkmittel selbst verschlossen werden können. Insbesondere können die Umlenk- bzw. Einkoppelmittel von der Vorderseite her zugänglich und/oder in die Leuchtplatte eingesetzt sein bzw. daran angebracht sein.

Es wird also vorteilhafterweise die transparente vorgeblendete Leuchtplatte durch die gelochte Verblendung hindurch mit Licht bestrahlt, welches an sich zumindest näherungsweise eine zur transparenten Platte senkrechte Hauptrichtung - mit ggf. entsprechender Aufweitung des entsprechenden Lichtkegels - besitzt und durch die genannten Lichteinkoppelmittel, die in die Leuchtplatte versenkt sein können, umgelenkt wird, so dass das Licht flach bzw. spitzwinklig zur Leuchtplattenebene bzw. -fläche in die Leuchtplatte eingekoppelt wird, so dass sich das Licht in der transparenten Leuchtplatte ausbreitet und an der Lichtumlenkschicht zwischen Leuchtplatte und Verblendung reflektiert und als diffuses Streulicht aus der Leuchtplatte wieder austritt. Dieses Einkopplungs- und Abgabeprinzip kann auch ohne die vorgenannte Durchstrahlung der Leuchtplatte mit gerichteter Lichtabgabe besondere Vorteile mit sich bringen und ggf. eigenständige erfinderische Bedeutung haben, insbesondere dann, wenn die Lichteinkoppel- und/oder -umlenkmittel in die Leuchtplatte integriert bzw. derart ausgebildet sind, dass sie für einen Betrachter des Decken- oder Wandpaneels nicht sichtbar sind.

Insbesondere kann zur Einkopplung des Zusatzlichts in die Leuchtplatte im Bereich der Hauptachse des von der jeweiligen Zusatzlichtquelle her kommenden Zusatzlichtkegels eine in der transparenten Leuchtplatte versenkt angeordnete, insbesondere zur Zusatzlichtquelle hin erhaben konturierte Reflektorfläche vorgesehen sein, an der das von der Zusatzlichtquelle her kommende Zusatzlicht umgelenkt und unter spitzem Winkel zur Leuchtplattenfläche in die Leuchtplatte eingekoppelt wird, so dass es sich dann in der transparenten Leuchtplatte ausbreiten und an der zuvor beschriebenen diffus reflektierenden und/oder streuenden Lichtumlenkschicht aufgestreut und umgelenkt werden kann. Die genannten in die Leuchtplatte integrierten Reflektorflächen können auch ohne die Durchstrahlung der Leuchtplatte mit gerichtetem Strahlerlicht besondere Vorteile erreichen und eigenständige erfinderische Bedeutung haben.

Die genannte Reflektorfläche kann hierbei insbesondere als Reflektorkegel oder Reflektorpyramide ausgebildet sein, die sich zur Zusatzlichtquelle hin verjüngt und dessen/deren Hauptachse zumindest näherungsweise parallel zur Hauptrichtung des von der Zusatzlichtquelle her kommenden Lichts ausgerichtet ist, wobei im Falle der Reflektorpyramide diese vorzugsweise vielflankig, beispielsweise mit fünf, sechs oder mehr Flanken ausgebildet ist. Insbesondere kann ein Reflektorkegel mit kreisförmiger Basis vorgesehen sein, dessen Spitze zur Zusatzlichtquelle hin weist und im Bereich der Hauptausbreitungsachse des von der Zusatzlichtquelle her kommenden Zusatzlichtes liegt.

Die Reflektorflächen können hierbei in verschiedener Art und Weise ausgebildet und in der transparenten Leuchtplatte versenkt angeordnet werden, beispielsweise durch Ausbildung entsprechender kegelförmig konturierter Ausnehmungen in der transparenten Leuchtplatte, in die dann reflektierend beschichtete oder in anderer Weise an der Oberfläche reflektierend wirkende Einsatzkegel beispielsweise aus poliertem Aluminium eingesetzt werden können. Alternativ oder zusätzlich kann auch unmittelbar die Oberfläche der genannten Ausnehmungen in der transparenten Leuchtplatte reflektierend beschichtet werden.

In vorteilhafter Weiterbildung der Erfindung besitzen die genannten in der transparenten Leuchtplatte versenkten Reflektorflächen eine Konturierung, die die Reflektorflächen für einen Betrachter des Decken- oder Wandpaneels unsichtbar werden lässt. Hierdurch kann eine Aufhellung der Leuchtplatte und somit des gesamten Decken- bzw. Wandpaneels erreicht werden, ohne dass eine Lichtquelle sichtbar wäre, so dass das Licht für den Betrachter sozusagen aus dem Nichts zu kommen scheint.

Insbesondere können die im transparenten Leuchtpaneel versenkt angeordneten Reflektorflächen Flankenwinkel besitzen, die größer als 2 x 30°, vorzugsweise größer als 2 x 45° sind, so dass die erhaben ausgebildeten Reflektorflächen insgesamt recht flach ansteigen, so dass sie für den Betrachter der Leuchtplatte bzw. des Wand- oder Deckenpaneels nicht sichtbar sind.

In vorteilhafter Weiterbildung der Erfindung können Reflektorkegel mit einem Kegelwinkel im Bereich von 2 x 35° bis 2 x 60°, insbesondere 2 x 45° bis 2 x 55° vorgesehen sein. Hierdurch wird eine vorteilhafte Lichteinkopplung bei gleichzeitig vollständiger Unsichtbarkeit der Reflektorflächen erreicht.

Die Lichteinkopplung des Zusatzlichts in die transparente Leuchtplatte kann auch durch Linsen erreicht werden, die vorteilhafterweise versenkt in der transparenten Leuchtplatte angeordnet werden können, beispielsweise in schlitzförmigen oder lochförmigen Ausnehmungen, die im Bereich der Lichtaustrittsöffnungen des gelochten Verblendungspaneels bzw. deren Verlängerung vorgesehen sein können. Insbesondere können hier seitlich emittierende Linsen Verwendung finden, die im Bereich des aus den Lichtaustrittsöffnungen der gelochten Verblendung austretenden Zusatzlichtkegels angeordnet sind und dort das Zusatzlicht vorteilhafterweise vollständig einfangen und seitlich abstrahlen, insbesondere unter einem spitzen Winkel bezüglich der Leuchtplattenfläche. Insbesondere können die genannten Linsen nach Art von Side-Emitter-Linsen ausgebildet sein, die das von den Zusatzlichtquellen her kommende Licht mit einer stirnseitigen Lichteintrittsfläche einfangen und an umfangsseitig angeordneten Austrittsflächen abgeben.

Die genannten Linsen können hierbei vorteilhafterweise derart beschaffen sein, dass das von den Linsen abgegebene Licht unter einem Winkel im Bereich von +/-10° bis +/-30°, insbesondere etwa +/-20°, jeweils gemessen zur Leuchtplattenebene bzw. -fläche, in die Leuchtplatte eintritt.

Die genannten Linsen können hierbei vorteilhafterweise mit den jeweiligen Leuchtmitteln der Zusatzlichtquellen zu einer Baugruppe zusammengefasst sein, die von einer Rückseite her auf das gelochte Verblendungspaneel montierbar ist, wobei die Lichtaustrittsöffnungen der Verblendung in diesem Fall ausreichend groß bemessen sein können, um die genannten Side-Emitter-Linsen hindurch stecken zu können, so dass sie auf der Vorderseite des Verblendungspaneels herausstehen und dort das Licht seitlich in die transparente Leuchtplatte einkoppeln können. Insbesondere können die genannten Linsen unmittelbar auf einer Platine angeordnet werden bzw. damit verbunden werden, die die Leuchtmittel in Form von LEDs trägt.

Alternativ hierzu ist es jedoch auch möglich, die genannten seitlich abstrahlenden Linsen separat von der Zusatzlichtquellen-Baugruppe auszubilden, wobei vorteilhafterweise die Linsen in die transparente Leuchtplatte integriert werden bzw. daran befestigt werden können, so dass wiederum die Leuchtplatte zusammen mit den Linsen eine Baugruppe bildet. Hierdurch kann der zuvor schon genannte Vorteil erreicht werden, durch Anbau und Weglassen der transparenten Leuchtplatte alleine bei ansonsten unveränderter Ausbildung des beleuchtbaren Decken- bzw. Wandpaneels unterschiedliche Abstrahlcharakteristiken erzielen zu können.

Die Lichteinkoppelmittel in Form der genannten seitlich abstrahlenden Linsen können alternativ oder zusätzlich zu den zuvor beschriebenen Lichteinkoppelmitteln in Form der Reflektorflächen bzw. Reflektorkegel oder -pyramiden vorgesehen werden, beispielsweise dergestalt, dass einigen Zusatzlichtquellen Side-Emitter-Linsen und anderen Zusatzlichtquellen Reflektorkegel zugeordnet werden.

In Weiterbildung der Erfindung können die Lichtaustrittsöffnungen einen deutlich kleineren Durchmesser besitzen als die ihnen zugeordneten Strahler bzw. deren Leuchtmittel und Fokussieroptik. Durch diesen im Vergleich zu den Leuchten bzw. deren Fokussieroptik deutlich kleineren Durchmesser der Lichtaustrittsöffnungen werden für das Auge die hinter dem Paneel befindlichen Leuchten sozusagen unsichtbar bzw. werden sie sichtbar im wesentlichen nur noch dann, wenn die Blickachse einigermaßen mit der Lochachse der Lichtaustrittsöffnungen fluchtet, was jedoch insbesondere bei Deckenpaneelen bei normalem, schräg auf die Decke gerichtetem Blick regelmäßig nicht vorkommt.

Je nach Ausbildung der verwendeten Leuchte bzw. der dem jeweiligen Leuchtmittel zugeordneten Fokussieroptik kann der Durchmesser der Lichtaustrittsöffnungen nur einen Bruchteil des Leuchtmittel- bzw. Fokussieroptikdurchmessers betragen. Wird beispielsweise als Fokussieroptik eine Linse und/oder ein Reflektor verwendet, kann der Durchmesser der Lichtaustrittsöffnungen weniger als ²/₃, vorzugsweise weniger als die Hälfte des Durchmessers der Linse und/oder des Reflektors betragen. In vorteilhafter Weiterbildung der Erfindung kann der Durchmesser der Lichtaustrittsöffnungen in dem Paneel in einem Bereich von nur 3 bis 20 mm liegen, vorzugsweise nur zwischen 6 und 10 mm betragen.

Um eine energieeffiziente Raumausleuchtung zu erreichen und eine übermäßige Wärmeentwicklung im Bereich des Deckenpaneels und/oder darüber zu vermeiden, ist vorteilhafterweise die Fokussieroptik derart ausgebildet, dass der gesamte Lichtstrom der Leuchtmittel durch die Lichtaustrittsöffnungen in dem Paneel hindurch fokussiert wird. Der gesamte Strahlengang einer Leuchte wird derart abgelenkt, dass er vollständig durch die zugeordnete Lichtaustrittsöffnung hindurchgeführt wird. Dementsprechend kann mit Leuchtmitteln niedrigerer Leuchtkraft gearbeitet und dennoch eine ausreichende Raumausleuchtung erreicht werden. Insbesondere werden als Leuchtmittel punktförmige Lichtquellen verwendet, die das Licht vollständig in einen Halbraum abgeben. Insbesondere werden vorteilhafterweise als Leuchtmittel LEDs verwendet, wobei je nach Lichtkonzept für den jeweiligen Raum LEDs unterschiedlicher Lichtfarbe Verwendung finden können.

In Weiterbildung der Erfindung umfasst die Fokussieroptik zwischen den Leuchtmitteln und dem Paneel angeordnete Linsen, die den von den Leuchtmitteln abgegebenen Lichtstrom auf einen in der jeweiligen Lichtaustrittsöffnung liegenden Brennpunkt fokussieren.

Alternativ oder zusätzlich kann die Fokussieroptik auch einen Reflektor aufweisen, der die jeweilige Leuchtmittel auf der von dem Paneel abgewandten Seite umgibt. Vorteilhafterweise ist die Reflektorfläche des Reflektors derart geformt, dass in der vorgenannten Weise der vom Reflektor eingefangene Lichtstrom auf einen Brennpunkt im Bereich der Lichtaustrittsöffnung des Paneels fokussiert wird.

Die Erfindung wird nachfolgend anhand bevorzugter Ausführungsbeispiele und zugehöriger Zeichnungen näher erläutert. In den Zeichnungen zeigen:

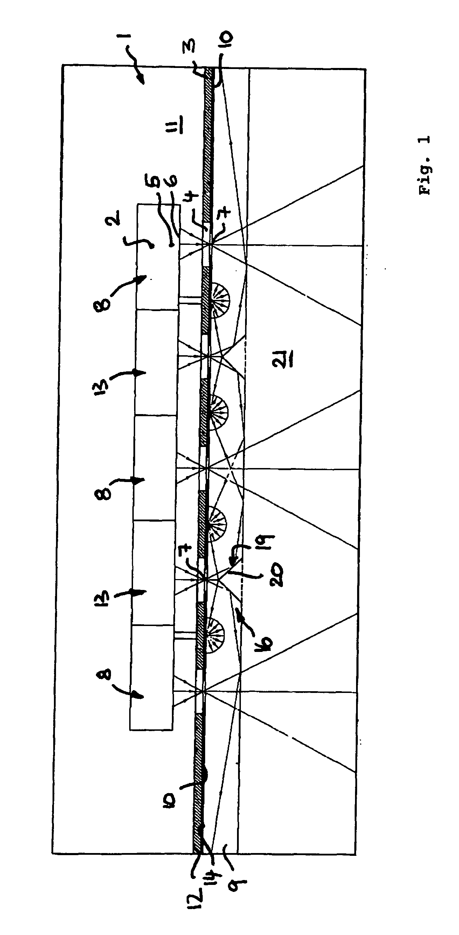

- Fig. 1:: eine schematische Schnittansicht durch eine Beleuchtungsvorrichtung nach einer vorteilhaften Ausführung der Erfindung, gemäß der sowohl die Strahler zur Abgabe des gerichteten Lichts als auch die Zusatzlichtquellen zur Erzeugung des diffus streuenden Zusatzlichts hinter einem gelochten Verblendungspaneel versteckt angeordnet sind, wobei bei dieser Ausführung das Zusatzlicht der Zusatzlichtquellen durch Reflektorkegel in die vor dem gelochten Verblendungspaneel angeordnete transparente Leuchtplatte eingekoppelt wird und die genannten Reflektorkegel in die Leuchtplatte versenkt sind, und

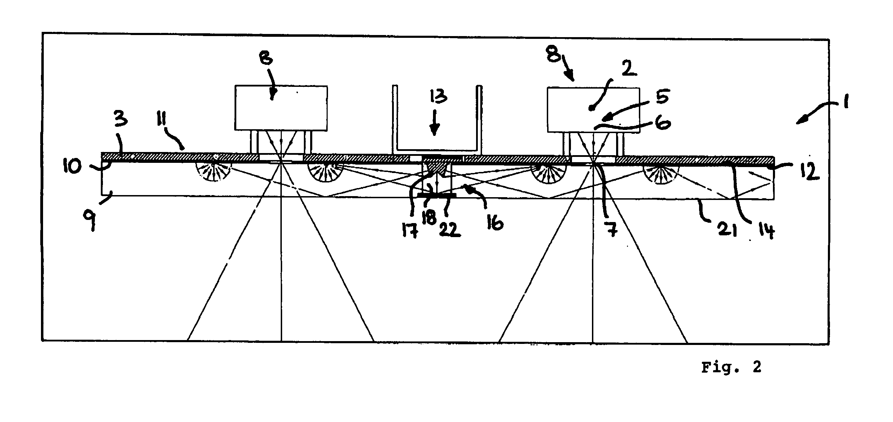

- Fig. 2:: eine schematische Schnittansicht der Beleuchtungsvorrichtung ähnlich Fig. 1, wobei die Einkopplung des Zusatzlichtes in die transparente Leuchtplatte nicht über die in Fig. 1 dargestellten Reflektorkegel, sondern über seitlich emittierende Linsen, die ebenfalls versenkt in der transparenten Leuchtplatte angeordnet sind, erfolgt.

Die in Figur 1 schematisch gezeichnete Beleuchtungsvorrichtung 1 umfasst eine Vielzahl von Strahlern 8 sowie Zusatzlichtquellen 13 bzw. Leuchten jeweils umfassend Leuchtmittel 2 vorteilhafterweise in Form von LEDs, die vorzugsweise in einem regelmäßigen Raster voneinander beabstandet angeordnet sind. Die Strahler 8 und Zusatzlichtquellen 13 können identisch, ggf. auch abweichend voneinander ausgebildet sein.

Den Leuchtmitteln 2 der Strahler 8 und Zusatzlichtquellen 13 zugeordnet ist eine Verblendung 3 in Form eines Paneels, das vorteilhafterweise in Form eines Wand- und/oder Deckenverkleidungspaneels ausgebildet ist und nach Art einer vorgeblendeten Wandverkleidung bzw. einer abgehängten Deckenverkleidung montiert werden kann. Das Paneel 3 kann dabei in Form einer ebenen Platte, beispielsweise einer Holzplatte aber auch einer Verbundbauplatte, ausgebildet sein.

Das Paneel 3 weist dabei Lichtaustrittsöffnungen 4 auf, die den Leuchten zugeordnet sind und in einem der Anordnung der Leuchten entsprechenden Raster angeordnet sind.

Wie Figur 1 zeigt, sind die Leuchtmittel 2 auf der nicht sichtbaren Rückseite des Paneels 3 von den Lichtaustrittsöffnungen 4 beabstandet. Zwischen den in Figur 1 gezeichneten Leuchtmitteln 2 und dem Paneel 3 bzw. dessen Lichtaustrittsöffnung 4 ist gemäß Figur 1 jeweils eine eine Fokussieroptik 5 bildende Linse 6 angeordnet, die das von dem Leuchtmittel 2 in den Halbraum abgestrahlte Licht bündelt und durch die an sich zu kleine Lichtaustrittsöffnung 4 hindurchleitet. Die Fokussieroptik kann ebenfalls von der Paneelrückseite beabstandet sein. Insbesondere nimmt die Linse 6 den vom Leuchtmittel 2 abgegebenen Lichtstrom vollständig auf und gibt ihn vollständig wieder ab, insbesondere bündelt die Linse 6 den vom Leuchtmittel 2 abgegebenen Lichtstrom auf einen Brennpunkt 7, der in der zugehörigen Lichtaustrittsöffnung 4 des Paneels 3 liegt, vgl. Figur 1.

Anstelle einer Linse kann die Fokussieroptik 5 auch einen Reflektor aufweisen, dessen Reflektionsfläche das Leuchtmittel 2 umgibt und derart geformt ist, dass der von der Leuchte abgegebene Lichtstrom auf den in der Lichtaustrittsöffnung 4 liegenden Brennpunkt 7 fokussiert wird. Gegebenenfalls kann ein solcher Reflektor auch mit der vorgenannten Linse 6 kombiniert werden, um die gewünschte Fokussierung durch die Lichtaustrittsöffnung 4 hindurch zu erreichen.

Die Lichtausbreitung der Strahler 8 und der Zusatzlichtquellen 13 in den auszuleuchtenden Raum hinein wird durch eine vor die gelochte Verblendung 3 gesetzte transparente Leuchtplatte 9, die als Glas- oder Kunststoffplatte ausgebildet sein kann, unterschiedlich gesteuert. Das von den Strahlern 8 kommende Strahlerlicht tritt im Wesentlichen unbeeinflusst durch die genannte transparente Leuchtplatte 9 hindurch und breitet sich von der Vorderseite 21 der Leuchtplatte 9 gerichteten Form eines Lichtkegel aus, vgl. Fig. 1.

Das von den Zusatzlichtquellen 13 her kommende Licht wird indes durch Lichteinkoppel- und/oder -umlenkmittel 16 im Bereich der Leuchtplatte 9 umgelenkt und in die genannte Leuchtplatte 9 eingekoppelt. Wie Fig. 1 zeigt, können die genannten Lichteinkoppel- und/oder -umlenkmittel 16 vorteilhafterweise in Form von erhaben in die Leuchtplatte hinein vorspringenden Reflektorflächen 19, insbesondere in Form von Reflektorkegeln 20 ausgebildet sein, die sich vorteilhafterweise symmetrisch zu den Zusatzlichtquellen 13 hin verjüngen. Bei kegeliger Ausbildung, d.h. Ausbildung als Reflektorkegel 20 können diese einen Kegelwinkel von vorteilhafterweise etwa 2 x 45° umfassen.

Insbesondere sind die genannten Reflektorkegel 20 derart beschaffen, dass sie von einem Betrachter des Decken- bzw. Wandpaneels nicht sichtbar sind.

Beispielsweise können von der Vorderseite 21 her kegelige Ausnehmungen in die Leuchtplatte 9 eingebracht, beispielsweise eingefräst werden, deren Oberfläche dann reflektierend beschichtet wird oder in die reflektierende Kegel eingesetzt werden, beispielsweise polierte Aluminiumkegel, die dann als Reflektorkegel 20 dienen.

Durch die genannten Reflektorkegel 20 wird das Zusatzlicht der Zusatzlichtquellen 13 spitzwinklig zur Leuchtplattenebene in die Leuchtplatte 9 gelenkt, vgl. Fig. 1, wo sich das Zusatzlicht dann ausbreiten kann, ggf. unter Totalreflexion an der Vorderseite 21 und/oder Reflexion an den Schmalseiten.

An der Rückseite 14 der Leuchtplatte 9 wird das genannte Zusatzlicht indes streuend reflektiert bzw. aufgestreut. Hierzu ist eine Umlenkschicht 10 zwischen Leuchtplatte 9 und Verblendung 3 vorgesehen, insbesondere auf die Rückseite 14 der Leuchtplatte 9 aufgebracht, beispielsweise in Form einer Bedruckung, die im Siebdruckverfahren aufgebracht werden kann, und/oder einer Satinierung oder einer ähnlichen Oberflächenschicht. Wie Fig. 1 zeigt, wird hierdurch das Zusatzlicht aufgestreut und breitet sich von der Vorderseite 21 der Leuchtplatte 9 streuend aus. Das Decken- bzw. Wandpaneel wird hierdurch flächig aufgehellt, so dass Schattigkeit im auszuleuchtenden Raum vermieden und sowohl hohe Horizontal- als auch hohe Vertikalbeleuchtungsstärken erreicht werden.

Im Bereich der den Strahlern 8 zugeordneten Lichtaustrittsöffnungen 4 besitzt die genannte Umlenkschicht 10 Aussparungen, so dass dort das Strahlerlicht ungehindert in die Leuchtplatte 9 eintreten und durch diese hindurchtreten kann, vgl. Fig. 1. Wie Fig. 2 zeigt, kann anstelle oder zusätzlich zu den in Fig. 1 gezeigten Reflektorkegeln 20 die Lichteinkopplung des Zusatzlichts in die Leuchtplatte 9 auch durch seitlich abstrahlende Linsen 17 erzielt werden, die das von den Zusatzlichtquellen 13 her kommende Zusatzlicht vorteilhafterweise vollständig einfangen und ähnlich den Reflektorkegeln 20 flach bzw. spitzwinklig zur Leuchtplattenebene in die Leuchtplatte 9 einkoppeln bzw. hineinlenken. Die Ausbreitung in der Leuchtplatte 9 und die dann erfolgende streuende Abstrahlung ist an sich entsprechend der zuvor beschriebenen Variante.

Wie Fig. 2 zeigt, kann die genannte Linse 17 in einer entsprechenden Aussparung in der Leuchtplatte 9 versenkt sein, wobei stirnseitig vor die Linse 17 eine Abdeckung 22 gesetzt sein kann, die die Linse 17 verblendet und/oder stirnseitig aus der Linse 17 austretendes Licht nochmals umlenkt bzw. reflektiert und ebenfalls in die Leuchtplatte 9 einkoppelt.

## Patentansprüche

1. Beleuchtungsvorrichtung zur Beleuchtung von Räumen, mit Strahlern (8) sowie einer vorzugsweise paneelförmigen Verblendung (3), die den Strahlern (8) zugeordnete Lichtaustrittsöffnungen (4) umfasst, durch die hindurch das von den auf einer Rückseite (11) der Verblendung angeordneten Strahlern (8) abgegebene Strahlerlicht auf einer Vorderseite (12) der Verblendung (3) abstrahlbar ist, wobei auf der Vorderseite (12) der Verblendung (3) eine transparente Leuchtplatte (9) vorgesehen ist, in die von zumindest einer Zusatzlichtquelle (13) abgegebenes Zusatzlicht eingekoppelt wird, wobei zwischen der Leuchtplatte (9) und der Verblendung (3) und/oder auf der der Verblendung (3) zugewandten Rückseite (14) der Leuchtplatte (9) eine diffus reflektierende und/oder streuende Lichtumlenkschicht (10), die im Bereich der Lichtaustrittsöffnungen (4) der Verblendung (3) Aussparungen umfasst, angeordnet ist, so dass das eingekoppelte Zusatzlicht von der Leuchtplatte (9) vergleichmäßigt diffus abgegeben wird und das Strahlerlicht der Strahler (8) durch die Leuchtplatte (9) hindurch gerichtet abstrahlbar ist, **dadurch gekennzeichnet, dass** die zumindest eine Zusatzlichtquelle (13) auf der Rückseite (11) der Verblendung (3) angeordnet ist, die eine der Zusatzlichtquelle (13) zugeordnete Lichtaustrittsöffnung (4) umfasst, durch die hindurch das Zusatzlicht auf die Leuchtplatte (9) strahlbar ist, wobei der zumindest einen Zusatzlichtquelle (13) Lichtumlenk- und/oder -einkoppelmittel (16) zur Einkopplung des durch die Lichtaustrittsöffnung (4) tretenden Zusatzlichts in die Leuchtplatte (9) unter spitzem Winkel zur Leuchtplattenebene oder -fläche in die Leuchtplatte (9) zugeordnet sind.

2. Beleuchtungsvorrichtung nach dem vorhergehenden Anspruch, wobei die Lichtumlenkschicht (10) eine Bedruckung und/oder Satinierung der Leuchtplattenrückseite (14) umfasst.

3. Beleuchtungsvorrichtung nach einem der vorhergehenden Ansprüche, wobei die Lichtumlenk- und/oder -einkoppelmittel (16) von einer Vorderseite der Leuchtplatte (9) her, die dem zu beleuchtenden Raum zugewandt und/oder der Verblendung (3) abgewandt ist, in die Leuchtplatte eingesetzt sind.

4. Beleuchtungsvorrichtung nach einem der beiden vorhergehenden Ansprüche, wobei die Lichtumlenk- und/oder -einkoppelmittel (16) seitlich abstrahlende Linsen (17) umfassen, die in Aussparungen (18) der Leuchtplatte (9) versenkt angeordnet sind.

5. Beleuchtungsvorrichtung nach dem vorhergehenden Anspruch, wobei die Linsen (17) jeweils an einer die Zusatzlichtquelle (13) umfassenden Zusatzlichtquellen-Baugruppe angeordnet sind, die auf einer Rückseite der Verblendung (3) montiert ist derart, dass die Linsen (17) jeweils durch eine Lichtaustrittsöffnung (4) hindurch gesteckt sind und sich auf einer Vorderseite der Verblendung (3) in der Leuchtplatte (9) versenkt erstrecken.

6. Beleuchtungsvorrichtung nach einem der vorhergehenden Ansprüche, wobei die die Linsen (17) aufnehmenden Aussparungen (18) zur Vorderseite der Leuchtplatte (9) hin offen ausgebildet und durch eine Abdeckung (22) verschließbar ist, die stirnseitig aus der Linse (17) austretendes Licht umlenkt und spitzwinklig in die Leuchtplatte einkoppelt.

7. Beleuchtungsvorrichtung nach einem der vorhergehenden Ansprüche, wobei die Lichtumlenk- und/oder Einkoppelmittel (16) zumindest eine in der Leuchtplatte (9) versenkt angeordnete, insbesondere erhaben konturierte Reflektorfläche (19) umfasst, an der das Zusatzlicht umlenkbar und von der das Zusatzlicht spitzwinklig zur Leuchtplattenebene oder -fläche in die Leuchtplatte (9) einkoppelbar ist.

8. Beleuchtungsvorrichtung nach dem vorhergehenden Anspruch, wobei die Reflektorfläche (19) in Form eines Reflektorkegels (20) oder einer vorzugsweise vielflankigen Reflektorpyramide ausgebildet ist, der/die sich zur Zusatzlichtquelle (13) hin verjüngt und zumindest teilweise in der Leuchtplatte (9) versenkt angeordnet ist.

9. Beleuchtungsvorrichtung nach einem der beiden vorhergehenden Ansprüche, wobei die zumindest eine Reflektorfläche (19) derart angeordnet und ausgebildet ist, dass sie von einer Vorderseite (21) der Leuchtplatte (9) her unsichtbar ist.

10. Beleuchtungsvorrichtung nach einem der drei vorhergehenden Ansprüche, wobei die Reflektorfläche einen Flanken- oder Kegelwinkel im Bereich von 2 x 30° bis 2 x 60°, vorzugsweise 2 x 45° bis 2 x 55° besitzt.

11. Beleuchtungsvorrichtung nach einem der vorhergehenden Ansprüche, wobei die Leuchtplatte (9) im Bereich der zumindest einen Reflektorfläche (19) eine vorzugsweise kegelförmige Ausnehmung umfasst, in die ein Reflektorkorpus eingesetzt ist und/oder deren Oberfläche reflektierend beschichtet ist.

12. Beleuchtungsvorrichtung nach dem vorhergehenden Anspruch, wobei die Ausnehmung zur Vorderseite der Leuchtplatte (9) hin offen ausgebildet ist und von dem in die Ausnehmung einsetzbaren Reflektorkorpus, insbesondere -kegel (20) passgenau verschließbar ist.

13. Beleuchtungsvorrichtung nach einem der vorhergehenden Ansprüche, wobei den Strahlern (8) und/oder der zumindest einen Zusatzlichtquelle (13) jeweils eine Fokussieroptik (5) zur Bündelung des abgegebenen Lichts auf einen im Bereich der zugeordneten Lichtaustrittsöffnung (4) liegenden Brennpunkt (7) zugeordnet ist, wobei die Lichtaustrittsöffnungen (4) einen kleineren Durchmesser besitzen als ihnen zugeordnete Leuchtmittel (2) der Strahler (8) und/oder Zusatzlichtquellen (13) und/oder deren Fokussieroptik (5), wobei die Fokussieroptik (5) derart ausgebildet ist, dass der im wesentlichen gesamte Lichtstrom der Leuchtmittel (2) durch die jeweilige Lichtaustrittsöffnung (4) hindurch fokussiert wird.

14. Beleuchtungsvorrichtung nach einem der vorhergehenden Ansprüche, wobei die Verblendung als Wand- und/oder Deckenpaneel (3) zur Verblendung einer Raumwand und/oder -decke, vorzugsweise als Holz- und oder Verbundplattenpaneel, ausgebildet ist, in dem die zumindest eine Lichtaustrittsöffnung (4) vorgesehen ist und/oder in das die zumindest eine Leuchte integriert ist.

15. Beleuchtungsvorrichtung nach einem der vorhergehenden Ansprüche, wobei die Zusatzlichtquellen als Strahler ausgebildet sind und die Leuchtplatte (9) von der Verblendung (3) abnehmbar ausgebildet ist, wobei die Beleuchtungsvorrichtung wahlweise bei abgenommener Leuchtplatte (3) als Decken- oder Wandstrahlerleuchte, die im wesentlichen nur gerichtetes Strahlerlicht abgibt, und mit aufgesetzter Leuchtplatte (9) als Mischleuchte, die gerichtetes Strahlerlicht und diffuses Streulicht abgibt, betreibbar ist.
